# EUROPÄISCHE PATENTSCHRIFT

(11) **EP 1 753 993 B1**
(45) Veröffentlichungstag und Bekanntmachung des Hinweises auf die Patenterteilung: **30.04.2008**
(21) Anmeldenummer: 05747558.4
(22) Anmeldetag: 07.06.2005
(51) Int. Cl.: F16L 37/60

(54) **GASSTECKDOSE**
GAS SOCKET
PRISE DE GAZ

(30) Priorität: 09.06.2004 DE 102004028039
(43) Veröffentlichungstag der Anmeldung: 21.02.2007
(73) Patentinhaber: Mertik Maxitrol GmbH & Co. KG, 06502 Thale (DE)
(72) Erfinder: ALBRECHT, Günter, 06502 Weddersleben (DE); VOGT, Thomas, 06507 Bad Suderode (DE); BAYER, Detlef, 59329 Wadersloh (DE)
(74) Vertreter: Albrecht, Günter
(86) Internationale Anmeldenummer: PCT/EP2005/006082
(87) Internationale Veröffentlichungsnummer: WO 2005/121625

(56) Entgegenhaltungen:
- EP-A- 0 754 899
- DE-B3- 10 312 997
- DE-C1- 10 061 653
- US-A- 4 552 333

## Beschreibung

### Technisches Gebiet

Die Erfindung betrifft eine Gassteckdose, die eingangsseitig für die Herstellung einer festen Verbindung mit einer ortsfest installierten Gasleitung, und die ausgangsseitig für den Anschluss eines Gasanschlusssteckers, insbesondere eines Gasschlauchsteckers, dient. Dabei befindet sich im Gehäuse eine Absperreinrichtung, die beim Anschluss des Gasanschlusssteckers erst nach hergestellter äußerer Dichtheit den inneren Gasweg freigibt.

### Stand der Technik

Gassteckdosen dienen zur Herstellung einer Verbindung zwischen einer ortsfest installierten Gasleitung und einem gasbetriebenen Gerät, wie beispielsweise einem Haushaltherd, einem Wäschetrockner oder einem Grill. Mit ihrer Hilfe ist eine einfache Verbindung der Gasverbraucher mit der Gasleitung möglich.

Eine solche Gassteckdose ist in der DE 100 61 653 C1 beschrieben. Diese Gassteckdose besteht aus einem Grundkörper mit integriertem Eingangsstutzen zur Herstellung einer festen Verbindung mit der ortsfest installierten Gasleitung, einem in den Grundkörper eingeschraubten Ausgangsstutzen und einer Grundplatte, die die äußere Mantelfläche des Ausgangsstutzens in einem definierten zur Aufnahme des Gasanschlusssteckers dienenden Abstand umschließt und ansonsten mit dem Grundkörper verschraubt ist. Desweiteren dient die Grundplatte als Anschlag an einer Wand, an der sie ebenfalls befestigt ist. Auf der Grundplatte ist eine Haube befestigt, die bei abgetrenntem Gasanschlussstecker mittels einer Abdeckung die Anschlussöffnung des Ausgangsstutzens verschließt.

Für den Einsatz von Gassteckdosen, insbesondere im Außenbereich, ist es zur Erhöhung der Sicherheit wünschenswert, wenn die Gasleitung zusätzlich auch manuell geschlossen werden kann. Desweiteren sollte ein Entfernen bzw. Einführen des Gasanschlusssteckers verhindert werden, wenn die Gasleitung manuell geöffnet ist. Dies ist mit einer Gassteckdose der oben genannten Art nicht möglich.

Um diesen Forderungen nachzukommen, ist es bisher üblich in die Gasleitung einen an sich bekannten Kugelhahn zu installieren, der zu diesem Zweck modifiziert ist. So ist der Kugelhahn ausgangsseitig nicht wie üblich mit einem Gewinde, sondern mit einem Steckanschluss für einen Gasanschlussstecker versehen.

Dieser Steckanschluss weist Sperrkugeln auf, die in auf dem Umfang des Gasausgangs befindlichen radialen Führungsöffnungen derart beweglich gelagert sind, dass sie mittels einer auf dem Gasausgang axial beweglichen Haltehülse in radialer Richtung lageveränderbar sind. Je nach ihrer Lage ist ein Einführen / Entfernen des Gasanschlusssteckers ermöglicht bzw. verhindert. Weiterhin ist der Betätigungsgriff des Kugelhahnes so ausgeführt, dass bei geöffnetem Kugelhahn die Haltehülse so fixiert ist, dass die Sperrkugeln die Sperrstellung einnehmen.

Zusätzlich ist im Inneren des Kugelhahnes ein Absperrventil eingesetzt, das durch den Gasanschlussstecker beim Einführen desselben geöffnet wird.

Bei dieser Ausführung ist es von Nachteil, dass die Gasausgangsöffnung nicht abgedeckt ist und somit keinen Schutz vor dem Eindringen von Fremdkörpern bildet. Auch ist diese Ausführung nicht für eine Unterputzinstallation geeignet. Weiterhin ist das Aussehen nicht so, wie es für einen Einsatz im Wohn- / Sichtbereich wünschenswert wäre.

### Darstellung der Erfindung

Der Erfindung liegt das Problem zugrunde, eine Gassteckdose der genannten Art zu entwickeln, die ein schnelles Anschließen und Lösen eines Gasanschlusssteckers ermöglicht. Dabei soll das Anschließen bzw. das Lösen nur möglich sein, wenn ein zusätzliches Absperrventil manuell geschlossen ist. Außerdem soll die Gassteckdose bei nicht angeschlossenem Gasanschlussstecker einen Schutz vor dem Eindringen von Fremdkörpern bieten. Desweiteren soll die Gassteckdose für eine Unterputzinstallation und vom äußeren Erscheinungsbild für einen Einsatz im Wohn- / Sichtbereich geeignet sein. Erfindungsgemäß wird das Problem dadurch gelöst, dass das Gehäuse der Gassteckdose eine Lagerstelle für ein Schaltelement aufweist, das einerseits mit einer Schaltkontur versehen ist, an der sich ein Stößel, der im Grundkörper des Gehäuses gelagert ist, mit seinem einen Ende abstützt, wohingegen das andere Ende des Stößels mit einem Ventilteller eines im gasführenden Raum des Grundkörpers angeordneten Absperrventils derart gekoppelt ist, dass das Absperrventil über das Schaltelement in seine Offen- oder Geschlossenstellung bringbar ist. Andererseits ist das Schaltelement mit einem Gesperre gekoppelt, über das eine Steckbewegung des Gasanschlusssteckers verhindert wird, wenn sich das Absperrventil in seiner Offenstellung befindet, wohingegen die Steckbewegung ermöglicht ist, wenn sich das Absperrventil in seiner Geschlossenstellung befindet.

Damit wurde eine Lösung gefunden, mit der die weiter oben genannten Nachteile des Standes der Technik beseitigt wurden. Durch die manuelle Betätigung des Schaltelementes erfolgt über das Absperrventil ein Öffnen bzw. Schließen der Gasleitung und damit verbunden gleichzeitig ein Verriegeln bzw. Entriegeln der Gasanschlusses. Mittels der Abdeckung wird bei nicht angeschlossenem Gasanschlussstecker die Anschlussöffnung verschlossen und so das Eindringen von Fremdkörpern verhindert.

Weitere vorteilhafte Ausgestaltungen der Erfindung gehen aus den anderen Patentansprüchen hervor. So erweist es sich als besonders günstig, wenn das Schaltelement in der Grundplatte gelagert ist.

Um die Montage und den Fertigungsaufwand möglichst einfach zu gestalten, ist es von Vorteil, wenn der Stößel in Längsrichtung zweistückig ausgeführt ist, wobei beide Stücken über ein Federelement miteinander verbunden sind.

Eine besonders vorteilhafte Ausgestaltung ergibt sich weiterhin, wenn das in Strömungsrichtung schließende Absperrventil einen auf dem Stößel axial beweglichen Ventilteller aufweist, der unter der Kraft einer in Öffnungsrichtung wirkenden Feder an einem auf dem Stößel befindlichen Anschlag anliegt. Unter Berücksichtigung einer entsprechenden Auslegung der Feder ist es damit möglich zu erreichen, dass das an sich manuell betätigbare Absperrventil auch von selbst schließt, wenn ein vorgegebener Durchflusswert überschritten wird, wie es beispielsweise bei einem Leck in der nachgeordneten Gasleitung der Fall sein kann, wodurch die Sicherheit weiter erhöht wird.

Einfache Lösungen des mit dem Schaltelement gekoppelten Gesperres zur Verhinderung des Entfernens bzw. Einführens des Gasanschlusssteckers, wenn die Gasleitung manuell geöffnet ist, ergeben sich, wenn das Gesperre als Rastschieber ausgebildet ist, der senkrecht zur Achse des Ausgangsstutzens beweglich ist, oder auch wenn das Gesperre als Wippe ausgebildet ist, deren Drehpunkt sich zwischen der Achse des Stößels und der Achse des Ausgangsstutzens befindet.

Dabei erweist es sich als günstig, wenn ein Klemmring zum Einsatz kommt, der auf dem Ausgangsstutzen axial beweglich gelagert ist und sich unter der Kraft einer Feder am Gesperre abstützt, das zwei symmetrisch angeordnete Schenkel aufweist, wobei über die Innenkontur des Klemmringes in an sich bekannter Weise auf dem Umfang des Ausgangsstutzens in radialen Führungsöffnungen angeordnete Sperrkugeln durch die Axialbewegung des Klemmringes in radialer Richtung bewegbar sind, wobei die Schenkel den Klemmring derart gabelförmig umfassen, dass eine Längsbewegung des Gesperres eine axiale Bewegung des Klemmringes zur Folge hat.

Bei der Verwendung eines Rastschiebers als Gesperre wird eine weitere günstige Lösung darin gesehen, dass sich in einer umlaufenden Nut des Ausgangsstutzens ein Drahtformteil befindet, das zwei symmetrisch angeordnete in Achsrichtung des Rastschiebers abgebogene Schenkel aufweist, die in einen sich verengenden Führungskonus des Rastschiebers hineinragen. Dabei sind auf dem Drahtformteil mehrere ringförmige Rastrollen aufgereiht, die in Abhängigkeit vom durch den Führungskonus bestimmten Abstand der Schenkel und dem sich dadurch ergebenden Durchmesser des in der Nut befindlichen Teils des Drahtformteils durch im Nutgrund befindliche radiale Führungsöffnungen in das Innere des Ausgangsstutzens hineinragen.

### Ausführungsbeispiel

Die erfindungsgemäße Gassteckdose wird nachstehend an Ausführungsbeispielen näher beschrieben. Es zeigen:
- Fig. 1: eine Gassteckdose in geschnittener Darstellung in Geschlossenstellung,
- Fig. 2: eine Ansicht A der Gassteckdose aus Figur 1,
- Fig. 3: eine Darstellung der aufgebrochenen Gassteckdose aus Figur 2,
- Fig. 4: eine Detailansicht B aus Figur 1,
- Fig. 5: eine Detailansicht C - C aus Figur 3,

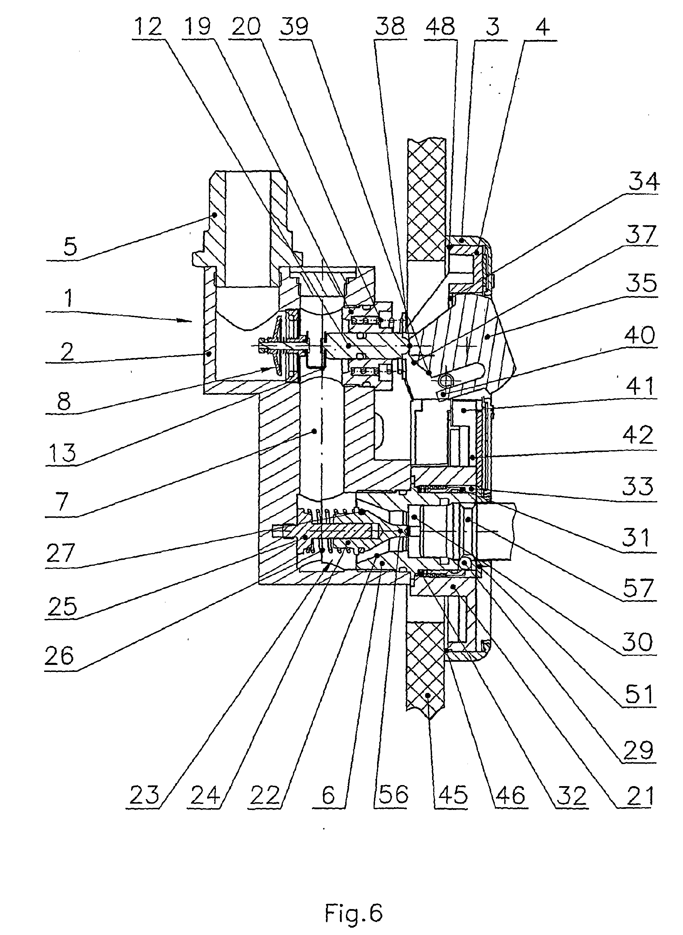

- Fig. 6: eine Gassteckdose aus Figur 1 in geschnittener Darstellung in Offenstellung,
- Fig.7: eine zweite Ausführungsform einer Gassteckdose in geschnittener Darstellung in Geschlossenstellung,
- Fig.8: eine Ansicht D der Gassteckdose aus Figur 7 in aufgebrochener Darstellung,
- Fig.9: eine dritte Ausführungsform einer Gassteckdose in aufgebrochener Darstellung,
- Fig. 10: eine Schnittansicht E - E aus Fig.9,
- Fig. 11: eine Einzelheit einer Ansicht F aus Figur 10.

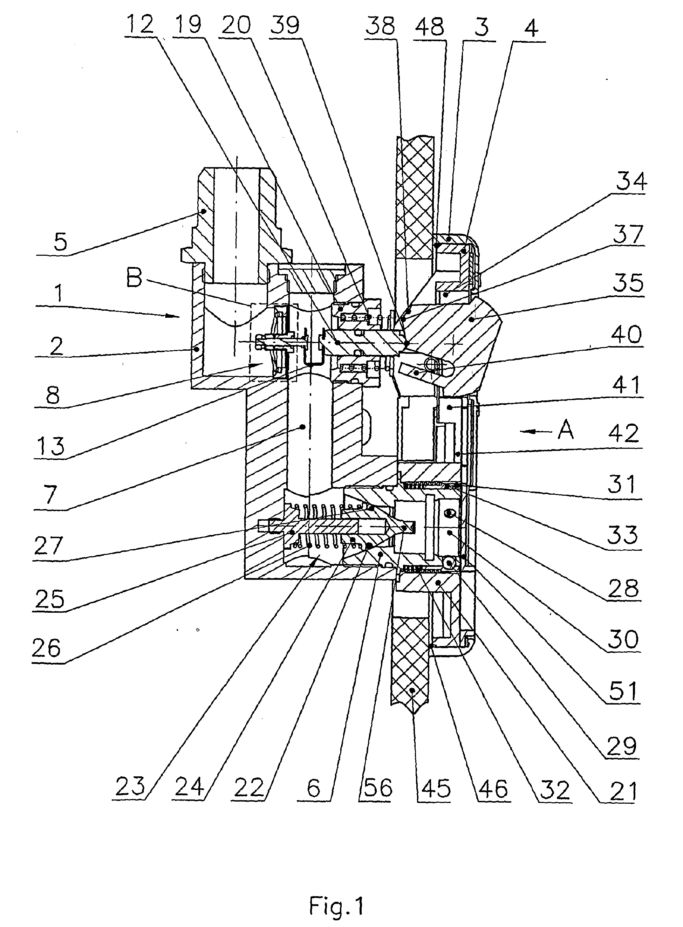

Eine erfindungsgemäße Gassteckdose, wie sie als eine für eine Unterputzinstallation geeignete Ausführungsform in Fig. 1 im Schnitt dargestellt ist, weist ein mehrstückiges Gehäuse 1 auf, das aus einem Grundkörper 2, einer Haube 3 und einer Grundplatte 4 besteht, die fest miteinander verbunden sind.

In den Grundkörper 2 sind ein Eingangsstutzen 5, der in diesem Fall mit einem Außengewinde zur Herstellung einer festen Verbindung der Gassteckdose mit einer nicht dargestellten ortsfest installierten Gasleitung versehen ist, und ein Ausgangsstutzen 6, der zur Aufnahme eines maßlich abgestimmten Gasanschlusssteckers 57 dient, eingeschraubt. Dabei kann der Eingangsstutzen 5 als eine bekannte, und daher hier nicht näher erläuterte thermische Absperreinrichtung ausgeführt sein.

Parallel zur Achse des Ausgangsstutzens 6 weist der Grundkörper 2 eine weitere in den gasführenden Raum 7 ragende Öffnung auf, durch die ein den Raum 7 verschließendes Absperrventil 8 einsetzbar ist. Dazu wird in diesem Fall der ringförmige Sitz 9 des Absperrventils 8 eingepresst. Das nachfolgend näher beschriebene in diesem Ausführungsbeispiel zum Einsatz kommende Absperrventil 8 ist dabei gleichzeitig als Sicherheitsschließvorrichtung konzipiert, die beim Überschreiten eines festgelegten Durchflusswertes den gasführenden Raum 7 selbsttätig schließt.

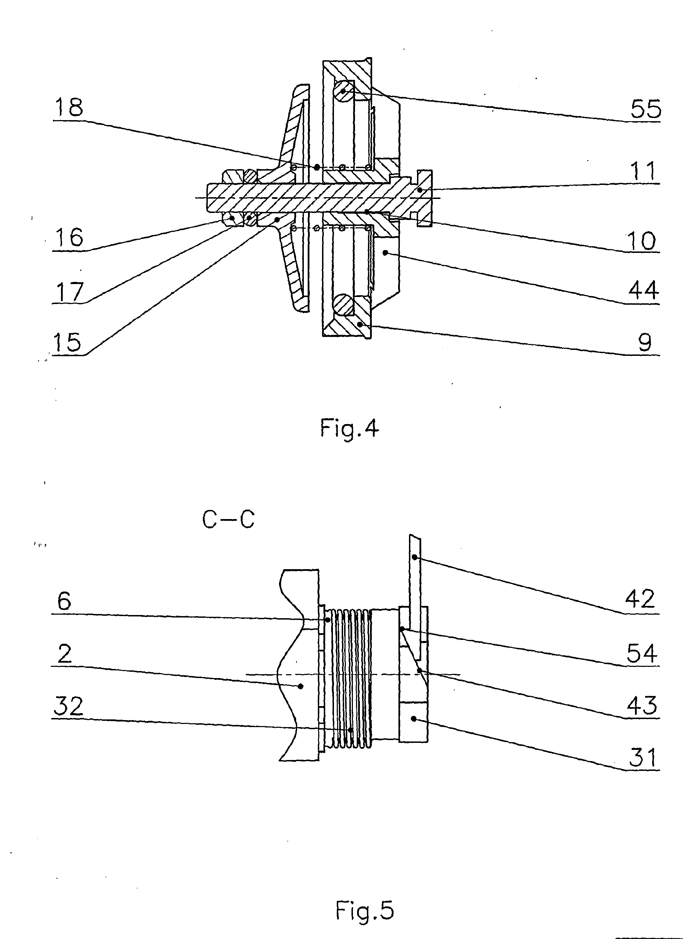

Der Sitz 9 des in Fig. 4 geschnitten und in geöffnetem Zustand dargestellten Absperrventils 8 weist ausgangsseitig radiale Stege 44 auf, die gleichmäßig auf dem Umfang verteilt sind und eine mittig angeordnete Lagerstelle 10 für einen ersten Teil 11 eines zweistückig ausgebildeten Stößels 11/12 bilden, wobei beide Teile mittels eines Federelementes 13 miteinander formschlüssig verbunden sind. Auf dem Stößel 11, der an seinem eingangsseitigen Ende einen Bund 16 aufweist, der günstigerweise zur Justierung/Einstellung des weiter unten näher erläuterten Schließdurchflusses lageeinstellbar ausgeführt ist, ist ein in Strömungsrichtung schließender Ventilteller 15 längsbeweglich gelagert, wobei zwischen Bund 16 und Ventilteller 15 ein als elastisches Dichtelement dienender O-Ring 17 angeordnet ist. Unter der Einwirkung einer sich an den Stegen 44 abstützenden Feder 18 stützt sich der Ventilteller 15 in Offenstellung gegen den O-Ring 17 ab, wohingegen der Ventilteller 15 in Geschlossenstellung an einem im Sitz 9 befindlichen, ebenfalls als O-Ring 55 ausgebildeten elastischen Dichtelement anliegt.

In einer die Öffnung 14 verschließenden Buchse 19 wird der Teil 12 des Stößels 11/12 längsbeweglich gelagert und gasdicht nach Außen geführt. Durch eine sich an der Buchse 19 abstützende Feder 20 wird der Stößel 11/12 in Schließrichtung des Absperrventils 8 belastet.

Eine ebenfalls noch zum Gehäuse 1 zugehörige Grundplatte 4 dient als Anschlag an eine schematisch dargestellte Vorsatzwand 45, wie sie in vielen Fällen insbesondere im Wohnungsbau Verwendung findet, und an der sie in bekannter Weise beispielsweise mittels Schrauben und Dübeln entweder direkt oder mittels einer separaten sogenannten Unterputzdose befestigt ist. Ein in die Vorsatzwand 45 hineinragender rohrförmigen Bund 21 umschließt die aus dem Grundkörper 2 herausragende äußere Mantelfläche des Ausgangsstutzens 6 in einem weiter unten näher erläuterten definierten Abstand. Über beispielsweise nicht dargestellte Schrauben erfolgt die Anbindung der Grundplatte 4 an den Grundkörper 2.

Das in den Grundkörper 2 hineinragende Ende des Ausgangsstutzens 6 bildet einen Ventilsitz 22 für eine Absperreinrichtung 23, deren Schließkörper 24 im Grundkörper 2 längsbeweglich zur Achse des Ausgangsstutzens 6 und damit auch zum Ventilsitz 22 auf einem Führungsstück 25 gelagert ist. Dabei wird der Schließkörper 24 unter der Kraft einer Schließfeder 26, die sich mit einem Ende an der Innenwandung des Grundkörpers 2 und mit dem anderen Ende am Schließkörper 24 abstützt, in Schließrichtung belastet. Zur Gewährleistung der Gasdichtheit dient ein auf dem Schließkörper 24 befindlicher O-Ring 27, der in Schließstellung am Ventilsitz 22 anliegt. Mit einer axialen Verlängerung 56 ragt der Schließkörper 24 in den Ausgangsstutzen 6 hinein.

Im Bereich des dem Grundkörper 2 abgewandten Endes besitzt der Ausgangsstutzen 6 mehrere auf dem Umfang verteilte, jedoch in einer Ebene befindliche radial gerichtete Führungsöffnungen 28. In jeder dieser Führungsöffnungen 28 ist eine Sperrkugel 29 angeordnet, die teilweise in die Anschlussöffnung 30 hineinragt, wobei ein Hindurchfallen der Sperrkugeln 29 durch eine in Richtung der Anschlussöffnung 30 ausgeführte Verringerung des Durchmessers der Führungsöffnung 28 verhindert wird.

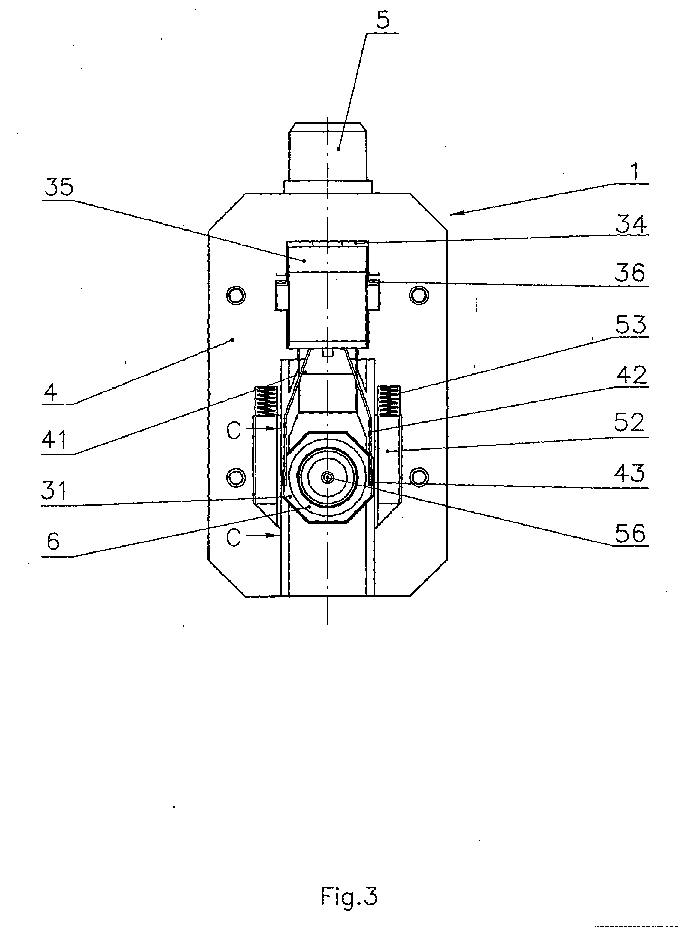

Auf dem Ausgangsstutzen 6 ist ein Klemmring 31 axial beweglich gelagert, dessen radiale Verdrehung dadurch verhindert wird, dass der Klemmring 31 in dem Bund 21 formschlüssig geführt wird. Wie aus Fig. 3 erkennbar, wurde dazu eine achteckige Kontur ausgewählt, um einerseits die Herstellung des Klemmringes 31 möglichst einfach gestalten zu können, und andererseits den notwendigen Platzbedarf möglichst gering zu halten. Dabei steht der Klemmring 31 in axialer Richtung unter der Wirkung einer sich am Grundkörper 2 abstützenden Sperrfeder 32. Mittels einer im Klemmring befindlichen Innenkontur 33 werden die Sperrkugeln 29 in Abhängigkeit von der Lage des Klemmringes 31 auf dem Ausgangsstutzen 6 entweder so in ihren Führungsöffnungen 28 gehalten, dass die Anschlussöffnung 30 komplett freigegeben ist, oder sie werden so weit in die Führungsöffnungen 28 hineingedrückt, dass sie teilweise in die Anschlussöffnung 30 hineinragen.

Die auf der Vorsatzwand 45 befestigte Grundplatte 4 weist eine zumindest teilweise umlaufende Einschnürung 46 auf, in die beim Montieren einer die Grundplatte 4 überdeckenden Haube 3 zugeordnete in der Haube 3 befindliche Rastelemente 48 einrasten.

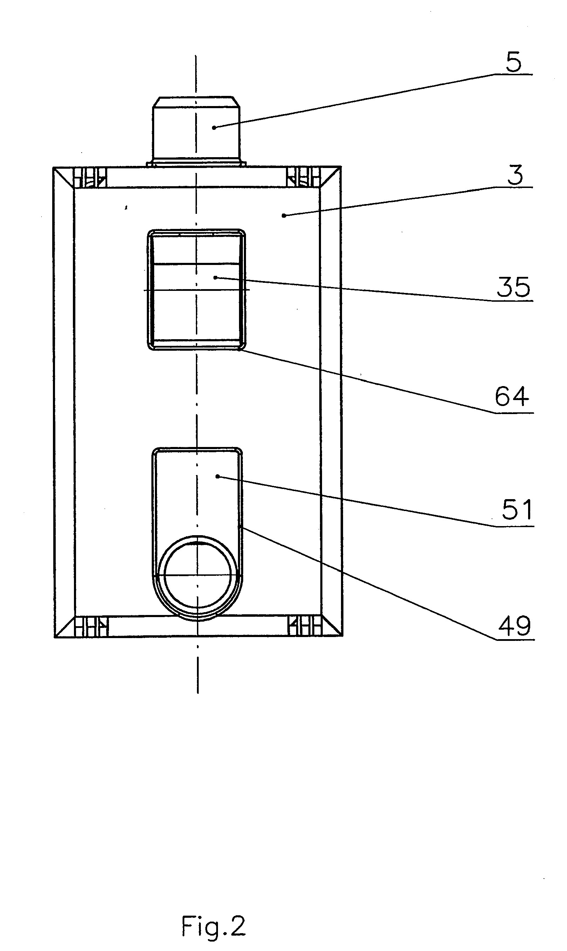

Die Haube 3, die in Fig. 2 in der Vorderansicht der Gassteckdose dargestellt ist, besitzt auf ihrer Vorderseite ein Langloch 49, wobei sich hinter einem Teil des Langloches 49 die Anschlussöffnung 30 des Ausgangsstutzens 6 befindet, und einen Durchbruch 64 für ein weiter unten näher erläutertes Schaltelement 35. Zwischen der Haube 3 und der Grundplatte 4 ist eine in ihrer Längsrichtung beweglich geführte Abdeckung 51 angeordnet.

Wie aus der Fig. 3, die eine Darstellung der Gassteckdose aus Fig. 2 bei entfernter Haube 3 und entfernter Abdeckung 51 zeigt, zu ersehen ist, befindet sich beidseitig der Anschlussöffnung 30 je eine Führungsbahn 52 für sich in der Grundplatte 4 abstützende Federn 53, die mit ihrem anderen Ende auf die in dieser Ansicht nicht dargestellte Abdeckung 51 so einwirken, dass die Abdeckung 51 den die Anschlussöffnung 30 des Ausgangsstutzens 6 freigebenden Bereich des Langloches 49 bei nichtgestecktem Gasanschlussstecker 57 verschließt.

Desweiteren ragt durch eine Ausnehmung 34 der Grundplatte 4 das bereits weiter oben genannte Schaltelement 35, das in entsprechenden in der Grundplatte 4 befindlichen Lagerstellen 36 schwenkbar gelagert ist, wobei sich die Schwenkachse des Schaltelementes 35 in einer Ebene mit der Längsachse des Stößels 11/12 befindet. Auf seiner dem Grundkörper 2 zugewandten Seite besitzt das Schaltelement 35 eine Schaltkontur 37, an der sich die Spitze des Stößels 12 abstützt. Die Schaltkontur 37 weist zwei Raststellungen 38/39 auf, die so festgelegt sind, dass sich das Absperrventil 8 entweder in der Offen- oder in der Geschlossenstellung befindet. Um eine möglichst einfache Fertigung zu erreichen dient das Federelement 13 dabei als Toleranzausgleich zwischen den beiden Teilen des Stößels 11/12.

Auf seiner dem Ausgangsstutzen 6 zugewandten Seite besitzt das Schaltelement 35 eine zapfenförmige Aufnahme 40, in der ein als Gesperre dienender Rastschieber 41 gelagert ist. An seinem dem Schaltelement 35 abgewandten Ende besitzt der Rastschieber 41 zwei symmetrisch angeordnete Schenkel 42, die den Klemmring 31 gabelförmig umfassen und dabei in eine am Klemmring 31 befindliche Führungskontur 43 ragen, so dass eine Längsbewegung des Rastschiebers 41 eine axiale Bewegung des Klemmringes 31 zur Folge hat. In einfacher Weise wird das dadurch gelöst, dass die beiden Schenkel 42 des Rastschiebers 41 jeweils, wie aus der in Fig. 5 gezeigten Detailansicht erkenntlich, eine Führungsnase 54 aufweisen, gegen die sich unter der Einwirkung der Sperrfeder 32 die in axialer Richtung als Schräge ausgebildete Führungskontur 43 abstützt.

Die Wirkungsweise der in diesem Ausführungsbeispiel dargestellten Gassteckdose ist nachfolgend beschrieben:

In der Fig. 1 befindet sich die Gassteckdose in der geschlossenen Stellung. Dabei ist der Ausgangsstutzen 6 mit seiner Anschlussöffnung 30 durch die Abdeckung 51 verdeckt. Auf Grund des nicht eingeführten Gasanschlusssteckers 57 ist auch die Absperreinrichtung 23 geschlossen. Da sich auch das Schaltelement 35 in der Geschlossenstellung befindet, liegt der Stößel 12 an der Raststellung 39 an, und der Ventilteller 15 wird gegen den im Sitz 9 befindlichen O-Ring 55 und gleichzeitig gegen den zwischen ihm und dem Bund 21 befindlichen O-Ring 17 gepresst, so dass der gasführende Raum 7 verschlossen ist. Durch das Schaltelement 35 wird über die Aufnahme 40 und den Rastschieber 41 der Klemmring 31 in eine solche Lage gebracht, dass die Sperrkugeln 29 beim Anliegen an der Innenkontur 33 die Anschlussöffnung 30 freigeben.

In dieser Stellung ist es möglich, dass der Gasanschlussstecker 57, nachdem die Abdeckung 51 gegen die Kraft der Federn 53 so weit bewegt worden ist, dass die Anschlussöffnung 30 freigegeben ist, eingeführt werden kann und über die Verlängerung 56 die Absperreinrichtung 23 geöffnet wird. Nach nunmehr erfolgender Betätigung des Schaltelementes 35 wird der Stößel 12 auf der Schaltkontur 37 in die Raststellung 38 bewegt. Der auf dem Stößel 11 sitzende O-Ring 17 gibt den Ventilteller 15 frei und über einen zwischen Ventilteller 15 und Stößel 11 auftretenden Leckfluss erfolgt ein Druckausgleich, so dass die Feder 18 den Ventilteller 15 in die Offenstellung bewegen kann. Die Verbindung mit der ortsfest installierten Gasleitung ist hergestellt. Gleichzeitig wird in der oben genannten Art und Weise der Klemmring 31 in eine solche Lage gebracht, dass die Sperrkugeln 29 in die Anschlussöffnung 30 hineinragen und damit den Gasanschlussstecker 57 verriegeln, so dass ein Entfernen desselben nicht mehr möglich ist.

Um die Verbindung wieder zu trennen, muss zuerst das Schaltelement 35 betätigt und damit das Absperrventil 8 geschlossen werden. Erst dann ist es möglich den Gasanschlussstecker 57 herauszuziehen. Es erfolgt ein Schließen der Absperreinrichtung 23. Nachdem der Gasanschlussstecker 57 die unter der Kraft der Federn 53 stehende Abdeckung 51 freigegeben hat, verschließt diese die Anschlussöffnung 30. Die Gassteckdose ist wieder, wie in der Figur 1 gezeigt, verschlossen.

Tritt nun beispielsweise bei angeschlossenem Gasanschlussstecker 57 ein Schlauchbruch o.ä. ein, der einen höheren als den mittels der eingestellten Lage des Bundes 16 sich durch die Kraft der Feder 18 ergebenden Schließdurchfluss zur Folge hat, so bewegt sich der Ventilteller 15 gegen die Kraft der Feder 18 auf dem Stößel 11 und schließt das dann als Sicherheitsschließvorrichtung arbeitende Absperrventil 8.

Bei einer veränderten Ausführungsform einer Gassteckdose kommt ebenfalls, wie weiter oben beschrieben, ein auf dem Ausgangsstutzen 6 axial beweglich gelagerter Klemmring 31 zum Einsatz, der mittels seiner Innenkontur 33 die Lage der Sperrkugeln 29 beeinflusst.

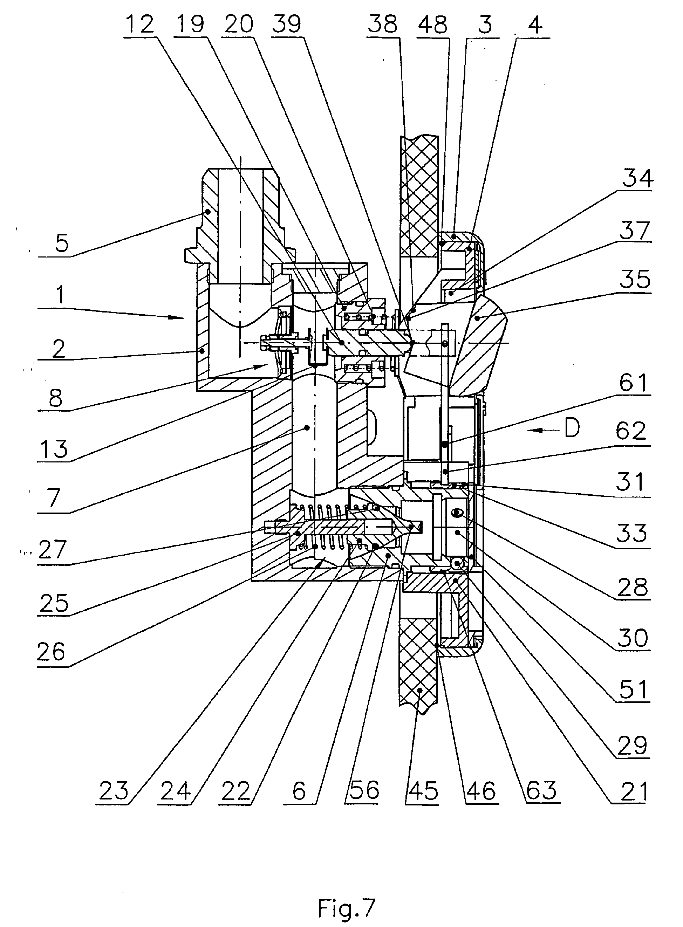

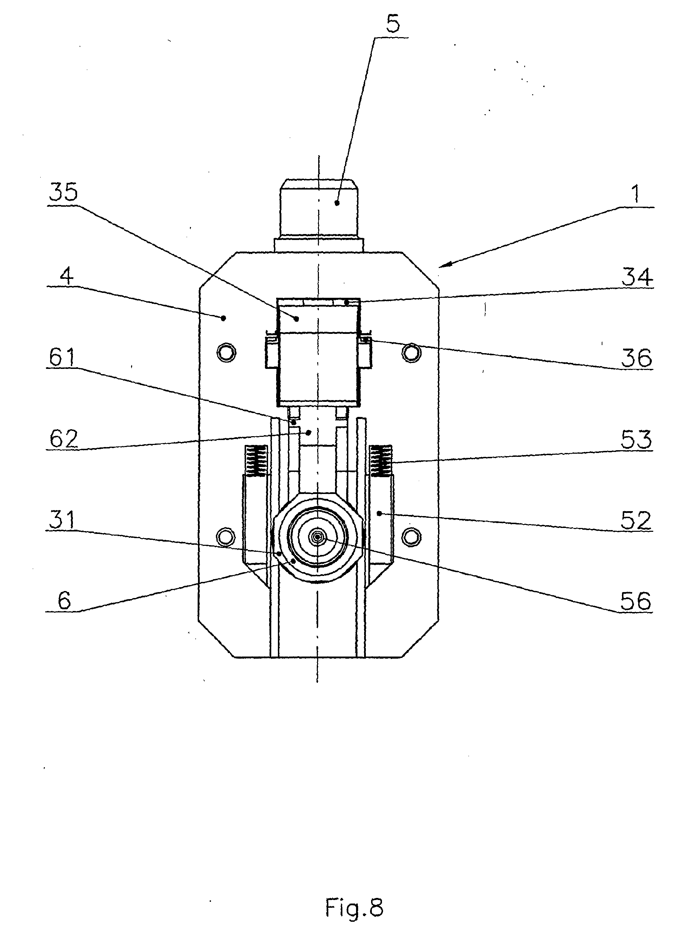

Jedoch ist in der Grundplatte 4 in einer Lagerstelle 61 eine Wippe 62 schwenkbar gelagert, deren eines Ende sich in einer Nut 63 des Klemmringes 31 abstützt, während die andere Seite am Stößel 12 angelängt ist (Figur 7 und 8). Es versteht sich, dass sich die Lagerstelle 61 auch am Grundkörper 2 befinden kann und/oder dass die Wippe 62 mit dem Schaltelement 35 verbunden ist.

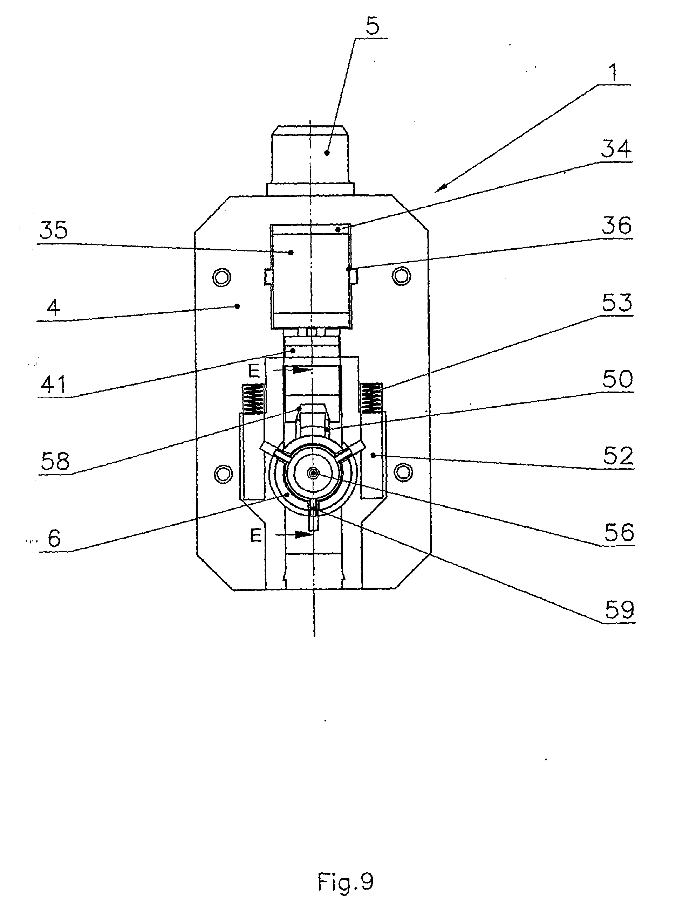

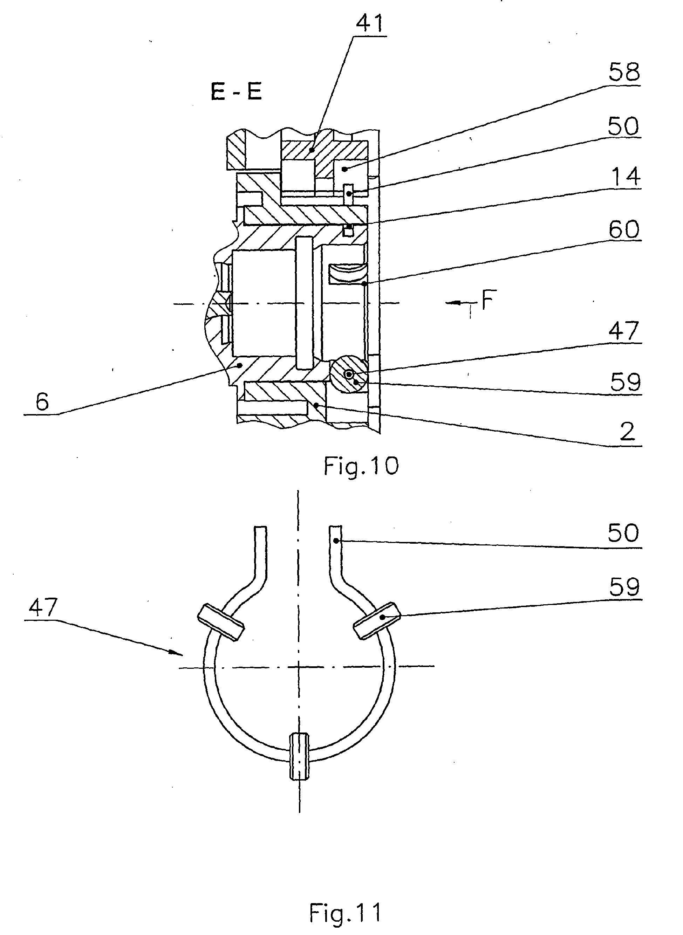

Eine weitere andere Ausführungsform einer Gassteckdose ist in den Figuren 9 bis 11 dargestellt. Bei dieser Ausführungsform, die ansonsten grundsätzlich mit den vorbeschriebenen übereinstimmt, besitzt der Ausgangsstutzen 6 im Bereich des dem Grundkörper 2 abgewandten Endes eine umlaufende Nut 14, in der sich ein in Figur 11 dargestelltes Drahtformteil 47 befindet, dass zwei parallel verlaufende abgebogene Schenkel 50 aufweist, die in einen trichterförmigen Führungskonus 58 des Rastschiebers 41 hineinragen, der seinerseits wieder in der zapfenförmigen Aufnahme 40 des Schaltelements 35 gelagert ist. Auf dem kreisförmigen Teil des Drahtformringes 47 sind mehrere, in diesem Fall drei zylindrische Rastrollen 59 aufgefädelt. Diese Rastrollen 59 befinden sich in in das Innere des Ausgangsstutzens 6 hineinragenden radialen Führungsöffnungen, die günstigerweise aus Montagegründen durch axial verlaufenden Schlitze 60 des Ausgangsstutzens 6 gebildet werden.

Ihre Wirkungsweise ist analog der im obigen Ausführungsbeispiel beschriebenen:

In Abhängigkeit von der Eindringtiefe der Schenkel 50 in den trichterförmigen Führungskonus 58 wird der Durchmesser des Drahtformteiles 47, und somit auch die auf die Längsachse des Ausgangsstutzens 6 bezogene radiale Lage der Rastrollen 59 verändert. Dadurch wird die bei geöffnetem Absperrventil 8 gewünschte Verriegelung des eingeführten Gasanschlusssteckers 57 erreicht.

Die erfindungsgemäße Gassteckdose ist selbstredend nicht auf die dargestellten Ausführungsbeispiele beschränkt. Vielmehr sind Änderungen, Abwandlungen und Kombinationen möglich, ohne den Rahmen der Erfindung zu verlassen.

So kann beispielsweise die Anordnung und/oder die Art und Weise der Ausführung des Gesperres verändert werden. Auch kann die Anzahl der Sperrkugeln 29 variieren. Weiterhin ist es möglich, die Gassteckdose als eine sogenannte Aufputz-Variante auszuführen.

### Aufstellung der Bezugszeichen

- 1: Gehäuse
- 2: Grundkörper
- 3: Haube
- 4: Grundplatte
- 5: Eingangsstutzen
- 6: Ausgangsstutzen
- 7: Raum
- 8: Absperrventil
- 9: Sitz
- 10: Lagerstelle
- 11: Stößel (Teil 1)
- 12: Stößel (Teil 2)
- 13: Federelement
- 14: Nut
- 15: Ventilteller
- 16: Bund
- 17: O-Ring
- 18: Feder
- 19: Buchse
- 20: Feder
- 21: Bund
- 22: Ventilsitz
- 23: Absperreinrichtung
- 24: Schließkörper
- 25: Führungsstück
- 26: Schließfeder
- 27: O-Ring
- 28: Führungsöffnung
- 29: Sperrkugel
- 30: Anschlussöffnung
- 31: Klemmring
- 32: Sperrfeder
- 33: Innenkontur
- 34: Ausnehmung
- 35: Schaltelement
- 36: Lagerstelle
- 37: Schaltkontur
- 38: Raststelle
- 39: Raststelle
- 40: Aufnahme
- 41: Rastschieber
- 42: Schenkel
- 43: Führungskontur
- 44: Steg
- 45: Vorsatzwand
- 46: Einschnürung
- 47: Drahtformteil
- 48: Rastelement
- 49: Langloch
- 50: Schenkel
- 51: Abdeckung
- 52: Führungsbahn
- 53: Feder
- 54: Führungsnase
- 55: O-Ring
- 56: Verlängerung
- 57: Gasanschlussstecker
- 58: Führungskonus
- 59: Rastrolle
- 60: Schlitz
- 61: Lagerstelle
- 62: Wippe
- 63: Nut
- 64: Durchbruch

## Patentansprüche

1. Gassteckdose mit einem Gehäuse (1), das aus einem Grundkörper (2), der einen Eingangsstutzen (5) für die Herstellung einer festen Verbindung der Gassteckdose mit einer ortsfest installierten Gasleitung, einen Ausgangsstutzen (6) für den Anschluss eines Gasanschlusssteckers (57), und eine in dem Grundkörper (2) befindliche Absperreinrichtung (23), die beim Anschluss des Gasanschlusssteckers (57) erst nach hergestellter äußerer Dichtheit den inneren Gasweg freigibt, aufweist, einer Haube (3), die bei abgetrenntem Gasanschlussstecker (57) mittels einer Abdeckung (51) die Anschlussöffnung (30) des Ausgangsstutzens (6) verschließt, und einer Grundplatte (4) besteht, die sämtlich miteinander verbunden sind, **dadurch gekennzeichnet, dass** das Gehäuse (1) eine Lagerstelle (36) für ein Schaltelement (35) aufweist, das einerseits mit einer Schaltkontur (37) versehen ist, an der sich ein Stößel (11; 12), der im Grundkörper (2) gelagert ist, mit seinem einen Ende abstützt, wohingegen das andere Ende mit einem Ventilteller (15) eines im gasführenden Raum (7) des Grundkörpers (2) angeordneten Absperrventils (8) derart gekoppelt ist, dass das Absperrventil (8) über das Schaltelement (35) in seine Offen- oder Geschlossenstellung bringbar ist, und dass das Schaltelement (35) andererseits mit einem Gesperre gekoppelt ist, über das eine Steckbewegung des Gasanschlusssteckers (57) verhindert wird, wenn sich das Absperrventil (8) in seiner Offenstellung befindet, wohingegen die Steckbewegung möglich ist, wenn sich das Absperrventil (8) in seiner Geschlossenstellung befindet.

2. Gassteckdose nach Patentanspruch 1, **dadurch gekennzeichnet, dass** das Schaltelement (35) in der Grundplatte (4) gelagert ist.

3. Gassteckdose nach Patentanspruch 1 oder 2, **dadurch gekennzeichnet, dass** der Stößel (11; 12) in Längsrichtung zweistückig ausgeführt ist, wobei beide Stücken über ein Federelement (13) miteinander verbunden sind.

4. Gassteckdose nach einem der Patentansprüche 1 bis 3, **dadurch gekennzeichnet, dass** das in Strömungsrichtung schließende Absperrventil (8) einen auf dem Stößel (11; 12) axial beweglichen Ventilteller (15) aufweist, der unter der Kraft einer in Öffnungsrichtung wirkenden Feder (18) an einem auf dem Stößel (11; 12) befindlichen Bund (16) anliegt.

5. Gassteckdose nach Patentanspruch 1 oder 2, **dadurch gekennzeichnet, dass** das Gesperre als Rastschieber (41) ausgebildet ist, der senkrecht zur Achse des Ausgangsstutzens (6) beweglich ist.

6. Gassteckdose nach Patentanspruch 1 oder 2, **dadurch gekennzeichnet, dass** das Gesperre als Wippe (62) ausgebildet ist, deren Drehpunkt sich zwischen der Achse des Stößels (11; 12) und der Achse des Ausgangsstutzens (6) befindet.

7. Gassteckdose nach Patentanspruch 5 oder 6, mit einem auf dem Ausgangsstutzen (6) axial beweglich gelagerten Klemmring (31), der sich unter der Kraft einer Sperrfeder (32) am Gesperre abstützt, wobei über die Innenkontur (33) des Klemmringes (31) in an sich bekannter Weise auf dem Umfang des Ausgangsstutzens in radialen Führungsöffnungen (28) angeordnete Sperrkugeln (29) durch die Axialbewegung des Klemmringes (31) in radialer Richtung bewegbar sind, **dadurch gekennzeichnet, dass** das Gesperre zwei symmetrisch angeordnete Schenkel (42) aufweist, die den Klemmring (31) derart gabelförmig umfassen, dass eine Längsbewegung des Gesperres eine axiale Bewegung des Klemmringes (31) zur Folge hat.

8. Gassteckdose nach Patentanspruch 5, **dadurch gekennzeichnet, dass** sich in einer umlaufenden Nut (63) des Ausgangsstutzens (6) ein Drahtformteil (47) befindet, der zwei symmetrisch angeordnete in Achsrichtung des Rastschiebers (41) abgebogene Schenkel (50) aufweist, die in einen sich verengenden Führungskonus (58) des Rastschiebers (41) hineinragen, und dass auf dem Drahtformteil (47) mehrere ringförmige Rastrollen (59) aufgereiht sind, die in Abhängigkeit vom durch den Führungskonus (58) bestimmten Abstand der Schenkel (50) und dem sich dadurch ergebenden Durchmesser des in der Nut (63) befindlichen Teils des Drahtformteiles (47) durch im Nutgrund befindliche radiale Führungsöffnungen (60) in das Innere des Ausgangsstutzens (6) hineinragen.

## Claims

1. Gas plug connector with a housing (1) consisting of a base (2) with an inlet socket (5) to provide a secure connection of the gas plug connector with a fixed gas pipe, an outlet socket (6) for connecting a gas plug (57) and a shut-off device (23) in the base (2), w2hich only opens the inner gas path when the gas plug (57) is connected after external tightness has been established, a hood (3) that covers the connection opening (30) of the outlet socket (6) by means of a cover (51) when the gas plug (57) is disconnected and a base plate (4) that are all interconnected, **characterised by the fact that** the housing (1) has a bearing (36) for a switching element (35) that on the one hand is fitted with a guide device (37), on which one end of a plunger (11; 12), installed in the base (2), is supported, whereas the other end is connected to a valve head (15) of a shut-off valve (8) positioned in the gas-conducting chamber (7) of the base (2) in such a way that the shut-off valve (8) can be brought into its open and closed position via the switching element (35) and that the switching element (35) on the other hand is connected to a locking device by means of which insertion of the gas plug (57) is prevented, when the shut-off valve (8) is in its open position, whereas insertion is possible when the shut-off valve (8) is in its closed position.

2. Gas plug connector in accordance with patent claim 1, **characterised by the fact that** the switching element (35) is installed in the base plate (4).

3. Gas plug connector in accordance with patent claim 1 or 2, **characterised by the fact that** the plunger (11; 12) is in two parts in its longitudinal direction with both parts connected with each other by a spring element (13).

4. Gas plug connector in accordance with one of the patent claims 1 to 3, **characterised by the fact that** the shut-off valve (8) closing in the direction of flow has an axially movable valve head (15) on the plunger (11; 12) which under the force of a spring acting in the direction of opening (18) rests on a flange (16) on the plunger (11; 12).

5. Gas plug connector in accordance with patent claim 1 or 2, **characterised by the fact that** the locking device is a latched slide (41) that is movable vertically to the axis of the outlet socket (6).

6. Gas plug connector in accordance with patent claim 1 or 2, **characterised by the fact that** the locking device is a rocker switch (62) whose centre of rotation is located between the axis of the plunger (11; 12) and the axis of the outlet socket (6).

7. Gas plug connector in accordance with patent claim 5 or 6, with an axially movable clamping ring (31) on the outlet socket (6) that is supported under the force of a retaining spring (32) on the locking device, whereby retaining balls (29) positioned on the circumference of the outlet socket in radial guide openings (28) are movable in a known way in a radial direction by the axial movement of the clamping ring (31) via the inner guide device (33) of the clamping ring (31), **characterised by the fact that** the locking device has two symmetrically positioned limbs (42) encircling the clamping ring (31) in a forklike manner such that a longitudinal movement of the locking device results in an axial movement of the clamping ring (31).

8. Gas plug connector in accordance with patent claim 5, **characterised by the fact that** a wire form part (47) is located in a circumferential groove (63) of the outlet socket (6) with two symmetrically positioned limbs (50) bent in the axial direction of the latched slide (41) which protrude into a tapering guide cone (58) of the latched slide (41) and that several ring-shaped latch rollers (59) are arranged in a line on the wire form part (47), which, dependent on the distance between the limbs (50) determined by the guide cone (58) and the resulting diameter of the wire form part (47) located in the groove (63), protrude through radial guide openings (28) in the base of the groove into the interior of the outlet socket (6).

## Revendications

1. Prise de gaz avec un boîtier (1) constitué d'un socle de base (2), qui présente une douille d'entrée (5) pour la réalisation d'un raccordement fixe de la prise de gaz avec une conduite de gaz installée de manière stationnaire, avec une douille de sortie (6) pour le branchement d'un connecteur de gaz mâle (57) et avec un dispositif de blocage (23), se trouvant dans le socle de base (2), lequel après le branchement du connecteur de gaz mâle (57) ne libère le passage intérieur du gaz que lorsque l'étanchéité extérieure est établie, d'une coiffe (3) qui ferme l'ouverture de connexion (30) de la douille de sortie (6) au moyen d'un couvercle (51) quand le connecteur de gaz mâle (57) est séparé, et d'une plaque de base (4) qui sont tous reliés ensemble, **caractérisée en ce que** le boîtier (1) est pourvu d'un point d'appui (36) pour un élément de couplage (35) qui est doté d'une part d'un profil de couplage (37) sur lequel s'appuie un poussoir (11 ; 12) disposé dans le socle de base (2) avec une de ses extrémités, alors que la deuxième extrémité est accouplée à la tête de vanne (15) d'une vanne d'arrêt (8) dans l'espace (7) d'adduction gazeuse du socle de base (2), de telle manière que la vanne d'arrêt (8) peut être amenée dans sa position ouverte ou fermée par l'élément de couplage (35) et que l'élément de couplage (35) d'autre part est accouplé à un dispositif d'encliquetage, interdisant un mouvement de couplage du connecteur de gaz mâle (57), lorsque la vanne d'arrêt (8) se trouve en position ouverte, alors que le mouvement de couplage est rendu possible si la vanne d'arrêt (8) se trouve en position fermée.

2. Prise de gaz selon la revendication du brevet 1, **caractérisée en ce que** l'élément de couplage (35) est logé dans la plaque de base (4).

3. Prise de gaz selon la revendication du brevet 1 ou 2, **caractérisée en ce que** le poussoir (11 ; 12) est exécuté en deux pièces en position longitudinale, les deux pièces étant reliées ensemble par un élément à ressort (13).

4. Prise de gaz selon une des revendications du brevet de 1 à 3, **caractérisée en ce qu'**une vanne d'arrêt (8) se fermant dans le sens du flux de gaz présente sur le poussoir (11 ; 12) une tête de vanne (15) se déplaçant axialement, qui sous la force d'un ressort (18) agissant en direction de l'ouverture repose sur un collet (16) qui se trouve sur le poussoir (11; 12).

5. Prise de gaz selon la revendication du brevet 1 ou 2, **caractérisée en ce que** le dispositif d'encliquetage constitué sous forme d'un poussoir d'encliquetage (41) se déplace verticalement par rapport à l'axe de la douille de sortie (6).

6. Prise de gaz selon la revendication du brevet 1 ou 2, **caractérisée en ce que** le dispositif d'encliquetage est constitué sous forme d'une bascule (62) dont le point de rotation se trouve entre l'axe du poussoir (11; 12) et l'axe de la douille de sortie (6).

7. Prise de gaz selon la revendication du brevet 5 ou 6, avec une bague de serrage (31) disposée de manière axialement mobile sur la douille de sortie (6) qui s'appuie sur le dispositif d'encliquetage sous la force d'un ressort de blocage (32), les billes de blocage (29) disposées au-dessus du profil intérieur (33) de la bague de serrage (31) pouvant se déplacer de la manière bien connue sur le contour de la douille de sortie dans les ouvertures radiales de guidage (28) par le mouvement axial de la bague de blocage (31) dans le sens radial, **caractérisée en ce que** le dispositif d'encliquetage présente deux branches (42) disposées symétriquement qui enserrent la bague de serrage (31) de manière fourchue de telle sorte qu'un mouvement longitudinal du dispositif d'encliquetage se traduit par un mouvement axial de la bague de serrage (31).

8. Prise de gaz selon la revendication du brevet 5, **caractérisée en ce que** dans une rainure (63) périphérique de la douille de sortie (6) se trouve une pièce filiforme (47) qui présente deux branches coudées (50) disposées symétriquement dans le sens axial du poussoir à crans d'arrêt (41) et qui dépassent dans un cône de guidage (58) se rétrécissant du poussoir à crans d'arrêt (41) et **en ce que** sur la pièce filiforme (47) plusieurs rouleaux d'arrêt annulaires (59) sont alignés, et, en fonction de l'écart des branches (50) déterminé par le cône de guidage (58) et du diamètre en résultant de la partie de la pièce filiforme (47), se trouvant dans la rainure (63), dépassent dans l'intérieur de la douille de sortie (6) par les ouvertures de guidage (60) radiales se trouvant dans le fond de la rainure.
